# FASCICULE DE BREVET EUROPEEN

(11) **EP 3 227 571 B1**
(45) Date de publication et mention de la délivrance du brevet: **12.12.2018**
(21) Numéro de dépôt: 15791702.2
(22) Date de dépôt: 21.10.2015
(51) Int. Cl.: F16B 31/02

(54) **ÉLÉMENT DE FIXATION AVEC LIMITATION DE COUPLE**
BEFESTIGUNGSELEMENT MIT DREHMOMENTBEGRENZUNG
FASTENER WITH TORQUE LIMITATION

(30) Priorité: 03.12.2014 FR 1461856
(43) Date de publication de la demande: 11.10.2017
(73) Titulaire: A. Raymond et Cie, 38000 Grenoble (FR)
(72) Inventeur: DUPREZ, Rémi, 38500 Coublevie (FR)
(74) Mandataire: Prugneau, Philippe
(86) Numéro de dépôt international: PCT/FR2015/052826
(87) Numéro de publication internationale: WO 2016/087729

(56) Documents cités:
- EP-A1- 2 428 688
- WO-A1-2010/031590
- DE-U1-202012 009 468
- US-A- 2 165 656
- US-A- 3 267 792
- US-A- 3 298 273

## Description

### Domaine technique

Le domaine de l'invention est celui des éléments de fixation pour fixer une pièce sur un support.

L'invention concerne plus particulièrement un élément de fixation comprenant une tête de vis avec une face inférieure plane de laquelle s'étend axialement un insert qui s'insert dans un alésage d'un corps de vis fileté extérieurement destiné à être vissé dans un trou d'un support, l'insert ayant une extrémité proximale pourvue d'une première butée d'entrainement en forme de dent de scie et le corps de vis ayant une extrémité supérieure pourvue d'une seconde butée d'entrainement biseautée dans laquelle vient s'engager la première butée de telle sorte que la tête de vis est apte à entrainer le corps de vis en rotation pour un vissage du corps de vis dans le support.

### Technique antérieure

On sait que les éléments de fixation d'une pièce sur un support comportent généralement une tête de vis présentant une interface pour coopérer avec un outil de serrage, et aussi un corps de vis cylindrique plein, fileté extérieurement et dont le filetage s'étend le long d'au moins une partie de la longueur du corps de vis.

Lorsque la pièce et le support sont positionnés dans la position souhaitée, un alésage commun est usiné à moins que la pièce et le support ne soient pré-usinés. Le corps de vis est ensuite inséré dans l'alésage commun de telle sorte que la tête de vis vienne buter contre la surface extérieure de la pièce à fixer.

Néanmoins, lors d'un serrage excessif de l'élément de fixation dans le support, le filetage de la vis peut être endommagé. Il en est de même de l'interface entre la tête de vis et l'outil de serrage. La tête de vis peut aussi être arrachée du corps de vis.

C'est pourquoi on cherche à introduire une limitation de couple à un élément de fixation.

On connait du document WO 02/08617 un élément de fixation fileté comportant deux éléments, d'une part un corps de vis creux comportant d'un coté un rebord sur lequel sont agencées des découpes biseautées et de l'autre coté des pattes filetées, et d'autre part une tige d'écartement destinée à se loger dans le corps creux du corps de vis et à écarter les pattes lorsque ce dernier est positionné correctement dans un alésage de l'élément à fixer. La tige d'écartement présente une tête avec sur sa face inférieure des saillies en forme de dent de scie complémentaires aux découpes biseautées du corps de vis. Lorsque les saillies en dent de scie sont enclenchées dans des découpes biseautées, la rotation de la tête entraine la rotation du corps de vis. Cet élément de fixation permet un positionnement rapide du corps de vis dans l'alésage mais ne présente pas de limitation de couple.

On connait du document US 6802680 un élément de fixation qui comprend un corps de vis avec une tige filetée, une tête de vis et un alésage formé dans la tête de vis. Le dispositif de fixation comprend en outre un troisième élément, un insert dimensionné pour s'adapter à l'intérieur de l'alésage de la tête de vis. Une première série de saillies formées sur une partie extérieure de la paroi latérale de l'alésage de la tête de vis s'accouple à une seconde série de saillies formées sur une paroi périphérique de l'insert. Lors de l'application d'un couple à l'insert de la tête en dessous d'une certaine valeur prédéterminée, la première série de saillies transfert ce couple à la seconde série de saillies pour faire tourner le corps de vis dans un alésage fileté pour serrer. Lorsque le couple appliqué dépasse une valeur de limitation de couple, l'une des première et seconde séries de saillies se déforme élastiquement et ne parvient plus à maintenir l'engagement.

Cet élément de fixation présente donc une limitation de couple mais a une structure à trois composantes complexe à réaliser.

### Exposé de l'invention

Le but de l'invention est de remédier à ces inconvénients en proposant un autre type d'élément de fixation pour la fixation d'une pièce sur un support.

L'idée à la base de l'invention est de proposer un élément de fixation présentant une limitation de couple et une structure simplifiée à deux composantes.

A cet effet, l'invention a pour objet un élément de fixation, comprenant une tête de vis avec une face inférieure plane de laquelle s'étend axialement un insert qui s'insert dans un alésage d'un corps de vis fileté extérieurement destiné à être vissé dans un trou d'un support, l'insert ayant une extrémité proximale pourvue d'une première butée d'entrainement en forme de dent de scie et le corps de vis ayant une extrémité supérieure pourvue d'une seconde butée d'entrainement biseautée dans laquelle vient s'engager la première butée de telle sorte que la tête de vis est apte à entrainer le corps de vis en rotation pour un vissage du corps de vis dans le support, caractérisé en ce que la face inférieure de la tête de vis s'étend radialement au-delà du corps de vis, en ce que l'extrémité supérieure du corps de vis est prévue sans tête et avec un diamètre plus petit que celui du trou du support.

On peut comprendre qu'à partir de la perte de contact entre les butées d'entrainement au maximum de l'écartement axial relatif entre les deux butées lors du vissage, la tête de vis tourne alors librement dans le corps de vis. Ainsi, même lors d'un vissage excessif de l'élément de fixation dans le support, le filetage de la vis ne sera pas endommagé. L'interface entre la tête de vis et l'outil de vissage sera préservée et le corps de vis ne sera pas arraché du support.

Le corps de vis peut comprendre en outre un moyen de guidage axial pour au moins un pion de guidage et l'insert de la tête de vis peut comporter au moins le pion de guidage qui s'étend radialement dans le moyen de guidage lorsque la première butée d'entrainement est engagée dans la seconde butée d'entrainement, et lorsque les première et seconde butées d'entrainement perdent leur engagement mutuel en fin du vissage du corps de vis, le pion peut être prévu pour se rompre sous l'effet un couple de force de vissage prédéterminé appliqué sur la tête de vis.

Les deux composantes, c'est-à-dire la tête de vis et le corps de vis, s'assemblent préalablement au vissage pour former l'élément de fixation. Cet assemblage est assuré par la géométrie de l'insert de la tête de vis qui se loge dans l'alésage du corps de vis. Le pion sur l'insert est guidé lors de cet assemblage.

Des moyens de retenue du corps de vis assurent le maintien de la tête de vis dans le corps de vis pour le vissage.

Avec un tel agencement, au cours du vissage, la partie supérieure de la tête de vis qui déborde du corps de vis vient prendre appui sur la surface externe de l'élément à fixer et la tête de vis est alors bloquée en translation axiale. Si l'Opérateur poursuit la mise en rotation de la tête de vis avec l'outil de vissage, la butée d'entrainement de la tête de vis qui est engagée dans la butée d'entrainement du corps de vis, continue à entrainer le corps de vis en rotation et en translation axiale. Lorsque la butée d'entrainement de la tête de vis perd le contact avec la butée d'entrainement du corps de vis, c'est le pion qui à son tour transmet au corps de vis le couple de force de vissage. La translation axiale du corps de vis se poursuit jusqu'à ce que le pion se rompe, laissant ainsi la tête de vis tourner dans le corps de vis sans provoquer la translation axiale de ce dernier. On comprend que le pion peut être prévu pour se rompre pour un couple de force de serrage prédéterminée.

L'élément de fixation selon l'invention peut présenter encore les particularités suivantes :
- le moyen de guidage axial peut être prévu sur le corps de vis et le pion sur l'insert de la tête de vis, ou inversement;
- l'insert de la tête de vis peut comprendre une partie d'extrémité distale formant une bague, l'alésage du corps de vis peut comporter un chambrage dans lequel vient se loger la bague et qui forme un épaulement sur lequel vient en appui une arrête de la bague ;

- le moyen de guidage est une fente qui s'étend axialement le long du chambrage, et le pion est disposé en saillie sur l'insert au dessus de la bague par rapport à la partie d'extrémité proximale de l'insert ;
- il est prévu dans la fente, une butée de maintien devant laquelle passe le pion lorsque la tête de vis est insérée dans le corps de vis ;
- il peut être fabriqué en une seule pièce moulée.

Avec toutes ces particularités, on obtient un élément de fixation avec une limitation de couple de structure simplifiée.

### Description sommaire des dessins

La présente invention sera mieux comprise et d'autres avantages apparaîtront à la lecture de la description qui suit et des dessins annexés dans lesquels :
- la figure 1 montre schématiquement, une vue de coté de l'élément de fixation selon l'invention dans lequel la tête de vis est désengagée du corps de vis ;
- la figure 2 montre schématiquement, une vue de coté de l'élément de fixation selon l'invention dans lequel la tête de vis est insérée dans le corps de vis ;
- la figure 3 montre schématiquement le vissage dans un écrou de l'élément de fixation selon l'invention avec entrainement en rotation et en translation du corps de vis par la tête de vis en rotation ;
- la figure 4 montre schématiquement la continuité du vissage de l'élément de fixation selon l'invention dans un écrou lorsque la tête de vis arrive en contact avec l'élément à fixer ;
- la figure 5 montre schématiquement la fin du vissage de l'élément de fixation selon l'invention lorsque la tête de vis en contact avec l'élément à fixer tourne librement ;
- la figure 6 montre schématiquement le pion de la tête de vis, dans la fente du corps de vis, avant sa rupture ;
- la figure 7 est une vue en coupe schématique de l'insert de la tête de vis retenu dans l'alésage du corps de vis.

### Description des modes de réalisation

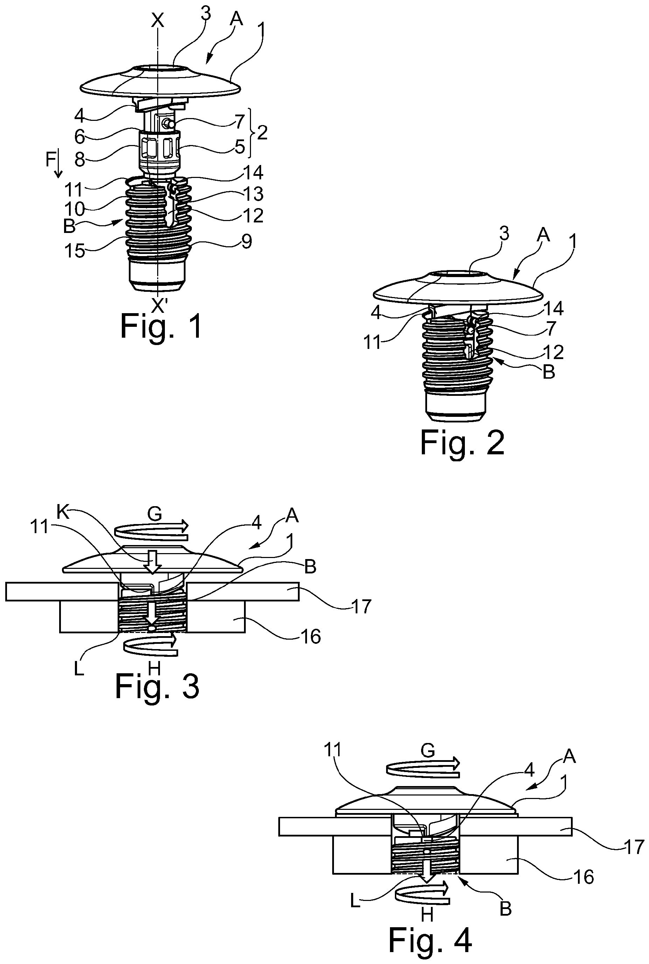

Sur la figure 1 on a illustré de façon schématique un exemple d'élément de fixation selon l'invention pour fixer une pièce sur un support par vissage. L'élément de fixation comprend une tête de vis A destinée à s'insérer dans le sens de la flèche F dans un corps de vis B préalablement au vissage. Les deux composantes, tête de vis et corps de vis, s'étendent selon un axe longitudinal XX' .

En utilisation normale de l'élément de fixation selon l'invention, la tête de vis A est pré assemblée dans le corps de vis B comme illustré sur la figure 2.

L'élément de fixation est en matière plastique par exemple, le corps de vis et la tête de vis peuvent être moulés en une seule pièce.

La tête de vis A présente une partie supérieure 1 ici sous forme de soucoupe et un insert 2 qui s'étend à partir de la face inférieure de la soucoupe le long de l'axe longitudinal XX'.

La tête de vis est destinée à être entrainée en rotation par un outil. Pour cela la tête de vis A présente au sommet de la soucoupe une interface 3 destinée à l'outil de montage manuel standard tel qu'un tournevis, un cruciforme ou encore une clé plate, ou un outil motorisé.

L'insert 2, globalement circulaire, a un diamètre inférieur au diamètre de la base de la coupole. Ainsi la face inférieure de la soucoupe de la tête de vis A présente une périphérie circulaire plane qui s'étend perpendiculairement à l'axe de l'élément fixation et créant une surface d'appui sur l'élément à fixer.

L'insert 2 comprend plusieurs éléments.

Sur l'extrémité proximale de l'insert 2, fixée sur la face inférieure de la soucoupe, se présente une butée 4 qui a une forme de dent de scie et qui sert de butée d'entrainement du corps de vis B.

Dans l'exemple de la figure 1, un pion 7 se trouve sur la partie médiane de l'insert 2. Il s'étend perpendiculairement à l'axe XX'.

Sur la partie distale de l'insert 2 se trouve une bague 5 avec une géométrie assurant l'insertion et la tenue de l'insert 2 de la tête de vis A dans le corps de vis B. La bague 5 présente sur sa partie proximale une arrête 6.

Des renfoncements 8 sur la bague 5 sont visibles sur la figure 1. Ils permettent de diminuer la quantité de matière plastique à utiliser lors du moulage.

Le corps de vis B est ici fileté extérieurement sur une majorité de sa surface. Le filetage 9 permet de s'associer à la pièce et au support taraudés à fixer ensemble. Le filetage 9 du corps de vis B peut être de n'importe quelle taille conventionnelle et peut comprendre n'importe quel pas de filetage et de profil conventionnel sans sortir du cadre de l'invention.

Un alésage 10 dans le corps de vis B s'étend à partir de l'extrémité supérieure du corps de vis B dans une direction le long de l'axe longitudinal XX'. Cet alésage 10 est destiné à recevoir et à maintenir l'insert 2 de la tête de vis A.

Plus particulièrement cet alésage 10 comprend un chambrage qui s'étend longitudinalement à partir de l'extrémité inférieure du corps de vis B.

Le chambrage a une géométrie adaptée pour recevoir et maintenir l'insert 2. Le chambrage présente un épaulement 13 sur lequel peut venir se loger l'arrête 6 de la bague 5 de la tête de vis A de manière à empêcher le retrait de la tête de vis A du corps de vis B.

Le corps de vis B comprend une fente 12 s'étendant axialement sur une partie du corps de vis B à partir de son extrémité supérieure, formant une ouverture élastique destinée à faciliter l'assemblage de la tête de vis A dans le corps de vis B.

A l'entrée de la fente 12, une butée 14 s'étend radialement en saillie. La butée 14 participe au maintien de l'insert 5 de la tête de vis A dans l'alésage 10 du corps de vis B.

Le corps de vis B comprend des bossages 15 disposés dans le filetage 9 et servant de frein filet. Le filet sera détruit par le taraudage intérieur des parties à fixer ensemble lors du vissage de l'élément de fixation.

Sur son extrémité supérieure, le corps de vis B présente une butée 11 d'entrainement biseautée, à partir de laquelle le filetage 9 extérieur s'étend le long du corps de vis B vers son extrémité inférieure.

On comprendra que le corps de vis B se terminant par la butée 11, ne présente pas de tête sur son extrémité supérieure. Le diamètre extérieur du corps de vis à cette extrémité supérieure est inférieur au diamètre extérieur du trou de support dans lequel le corps de vis est destiné à être enfoncé.

Sur la figure 2 on a représenté une vue de coté de l'élément de fixation pré assemblé et donc prêt à être utilisé.

Plus particulièrement, la figure 2 illustre l'insert 2 de la tête de vis A inséré dans l'alésage 10 du corps de vis B, et montre aussi la butée 11 d'entrainement biseautée du corps de vis B engagée avec la butée 4 d'entrainement en dent de scie de la tête de vis A.

Pour arriver à l'état de pré assemblage, la bague 5 a été insérée de manière coulissante par translation axiale dans l'alésage 10 du corps de vis B.

Afin que les butées 4 et 11 d'entrainement s'engagent correctement l'une dans l'autre, le pion 7 ici sert de guide pour le positionnement correct de la tête de vis A dans le corps de vis B. Le pion 7 est entré lui aussi par translation axiale dans la fente 12 du corps de vis B.

Lorsque le pion 7 passe la butée 14, du fait de la caractéristique d'élasticité du matériau de l'élément de fixation, l'ouverture formée par la fente 12 s'écarte puis se ressert. Le pion 7 se retrouve alors logé sous la butée 14 de la fente 12. A noter que le pion 7 ne s'étend pas radialement au-delà de la fente 12.

On comprend donc que, dans l'état de pré assemblage de l'élément de fixation selon l'invention, l'insert 2 de la tête de vis A est maintenu bloqué dans le corps de vis B d'une part par l'épaulement 13 du chambrage dans l'alésage 10 du corps de vis B qui permet de loger l'arrête 6 de la bague 5 de la tête de vis A, et d'autre part par la butée 14 de maintien qui se retrouve au dessus du pion 7.

Ainsi l'épaulement 13 et la butée 14 du corps de vis B sont des moyens de retenue en translation de la tête de vis A, qui empêchent le retrait de la tête de vis A du corps de vis B.

La fente 12 est un moyen de retenue en rotation de la tête de vis A dans le corps de vis B suite à l'engagement dans la fente 12 du pion 7 de la tête de vis A.

Pour fixer au support taraudé 16 une pièce 17 avec l'élément de fixation pré assemblé selon l'invention, on insère le corps de vis B dans le trou de la pièce 17 et on présente l'extrémité du corps de vis B face au taraudage du support 16. Le support 16 taraudé forme en quelque sorte un écrou pour le corps de vis B.

En tournant la tête de vis A avec un outil de vissage, la butée 4 entraine alors en rotation le corps de vis B par sa butée 11 dans le taraudage du support 16 comme illustré sur la figure 3.

La flèche G illustre la rotation de la tête de vis A par l'outil de vissage et la flèche H illustre la rotation du corps de vis B. La pièce 17 se trouve entre la tête de vis A et le support 17. On a un déplacement axial de la tête de vis A 16 illustré par la flèche K et simultanément un déplacement axial du corps de vis B illustré par la flèche L.

Sur la figure 4, on voit qu'au cours du vissage, la périphérie circulaire plane de la tête de vis arrive en contact avec la pièce 17 laquelle repose aussi sur le support 16. La tête de vis est alors bloquée en translation suivant la flèche K.

Néanmoins l'utilisateur continuant à visser l'élément de fixation, la butée 4 de la tête de vis A continue à entrainer en rotation la butée 11 du corps de vis. Le corps de vis B continue donc son mouvement L de translation axiale dans le support taraudé 16.

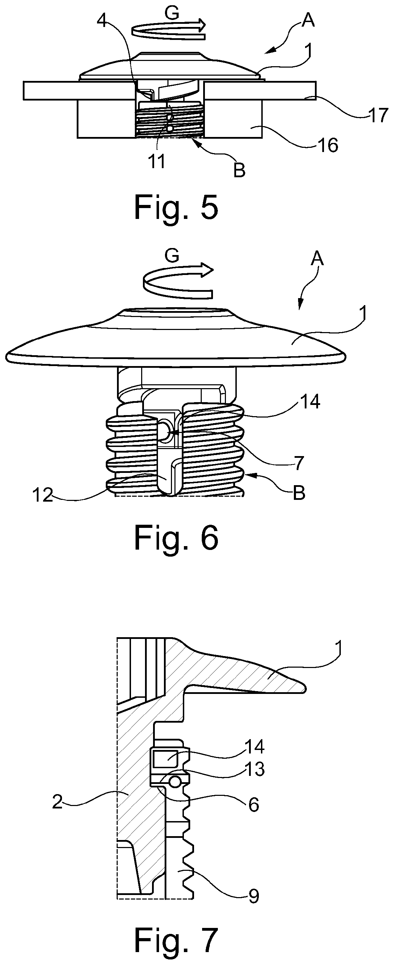

Le corps de vis B continue son mouvement L de translation dans le support taraudé 16 tant que les deux butées 4 et 11 restent en contact. Sur la figure 5, ces deux butées sont en limite de perte de contact et la pièce 17 est déjà légèrement serrée entre la tête de vis A et le support taraudé 16.

Au moment ou les butées 4 et 11 perdent le contact mutuel pendant le vissage de la tête de vis A dans le corps de vis B, l'Opérateur cherche généralement à forcer le vissage pour augmenter le serrage.

Ici, le pion 7 qui est dans la fente 12 comme illustré sur la figure 6 prend alors le relai de la butée 4 ce qui fait que le corps de vis B est encore entraîné en rotation par la tête de vis A ce qui a pour effet d'augmenter le serrage.

Mais selon l'invention, le pion 7 est prévu pour rompre dans la fente 12 quand un certain couple déterminé de force de serrage est exercé sur la tête de vis A. Suite à cette rupture du pion 7, le serrage de la pièce contre le support s'arrête et la tête de vis tourne seule sans le corps de vis sous l'action de l'outil de vissage ce qui a pour effet de protéger le corps de vis.

A ce moment, l'utilisateur sait que le vissage de la tête de vis dans le corps de vis est terminé.

Il faut comprendre que cet effet de protection du corps de vis par limitation de couple peut être obtenu sans la présence du pion de guidage comme indiqué plus haut.

Comme visible sur la figure 7, la tête de vis A est retenue en position axiale dans le corps de vis B par l'arrête 6 de la bague 5 qui se retrouve en pression avec l'épaulement 13 du chambrage de l'alésage 10 du corps de vis B.

On comprend donc que l'élément de fixation selon l'invention comprend une limitation de couple qui permet lors de la perte de contact des butées 4 et 11 d'entrainement et le cas échéant suite à la rupture du pion 7, de ne pas forcer ultérieurement la rotation du corps de vis dans le sens du vissage, protégeant ainsi l'intégralité structurelle de l'élément de fixation et de la pièce 17.

Il va de soi que la présente invention ne saurait être limitée à la description qui précède de l'un/ de plusieurs de ses modes de réalisation, susceptibles de subir quelques modifications sans pour autant sortir du cadre de l'invention.

## Revendications

1. Elément de fixation, comprenant une tête de vis (A) avec une face inférieure plane de laquelle s'étend axialement un insert (2) qui s'insert dans un alésage (10) d'un corps de vis (B) fileté extérieurement destiné à être vissé dans un trou d'un support, ledit insert (2) ayant une extrémité proximale pourvue d'une première butée (4) d'entrainement en forme de dent de scie et ledit corps de vis (B) ayant une extrémité supérieure pourvue d'une seconde butée (11) d'entrainement biseautée dans laquelle vient s'engager ladite première butée (4) de telle sorte que ladite tête de vis (A) est apte à entrainer ledit corps de vis (B) en rotation pour un vissage dudit corps de vis (B) dans ledit support, **caractérisé en ce que** ladite face inférieure de ladite tête de vis (A) s'étend radialement au-delà dudit corps de vis (B), **en ce que** ladite extrémité supérieure dudit corps de vis (B) est prévue sans tête et avec un diamètre plus petit que celui dudit trou dudit support.

2. Elément de fixation selon la revendication 1, **caractérisé en ce qu'**il comprend en outre un moyen de guidage axial pour au moins un pion (7) de guidage qui s'étend radialement dans ledit moyen de guidage lorsque ladite première butée (4) d'entrainement est engagée dans ladite seconde butée (11) d'entrainement de sorte que lorsque lesdites première et seconde butées (4,11) d'entrainement perdent leur engagement mutuel en fin du vissage dudit corps de vis (B), ledit pion (7) est prévu pour se rompre sous l'effet un couple de force de vissage prédéterminé appliqué sur ladite tête de vis (A).

3. Elément de fixation selon la revendication 2, **caractérisé en ce que** ledit moyen de guidage axial est prévu sur ledit corps de vis (B) et ledit pion (7) est prévu sur ledit insert (2) de ladite tête de vis (A).

4. Elément de fixation selon la revendication 1 ou 2, **caractérisé en ce que** ledit insert (2) de ladite tête de vis (A) comprend une partie d'extrémité distale formant une bague (5), **en ce que** ledit alésage (10) dudit corps de vis (B) comporte un chambrage dans lequel vient se loger ladite bague (5) et **en ce que** ledit chambrage forme un épaulement (13) sur lequel vient en appui une arrête (6) de ladite bague (5).

5. Elément de fixation selon la revendication 3, **caractérisé en ce que** ledit moyen de guidage est une fente (12) qui s'étend axialement le long dudit chambrage, et **en ce que** ledit pion (7) est disposé en saillie sur ledit insert (2) au dessus de ladite bague (5) par rapport à la partie d'extrémité proximale dudit insert (2).

6. Elément de fixation selon la revendication 5, **caractérisé en ce que** dans ladite fente (12) il est prévu une butée (14) de maintien devant laquelle passe ledit pion (7) lorsque ladite tête de vis (A) est insérée dans ledit corps de vis (B).

7. Elément de fixation selon l'une des revendications précédentes, **caractérisé en ce qu'**il est fabriqué en une seule pièce moulée.

## Patentansprüche

1. Befestigungselement, umfassend einen Schraubenkopf (A) mit einer flachen Unterseite, von der sich axial ein Einsatz (2) erstreckt, der in eine Bohrung (10) eines Schraubenkorpus (B) mit Außengewinde einsetzbar ist, welcher in ein Loch einer Unterlage schraubbar ist, wobei der Einsatz (2) ein proximales Ende mit einem ersten Mitnahmeanschlag (4) in Gestalt eines Zinkens aufweist und wobei der Schraubenkorpus (B) ein oberes Ende mit einem zweiten, angeschrägten Mitnahmeanschlag (11) aufweist, mit dem der erste Anschlag (4) in Eingriff gelangt, derart, dass der Schraubenkopf (A) den Schraubenkorpus (B) für einen Schraubvorgang des Schraubenkorpus (B) in der Unterlage in Rotation mitnehmen kann,
**dadurch gekennzeichnet,**
**dass** die Unterseite des Schraubenkopfes (A) sich radial über den Schraubenkorpus (B) hinaus erstreckt, und
**dass** das obere Ende des Schraubenkorpus (B) ohne Kopf und mit einem kleineren Durchmesser als derjenige des Lochs der Unterlage vorgesehen ist.

2. Befestigungselement nach Anspruch 1, **dadurch gekennzeichnet, dass** es ferner ein axiales Führungsmittel für wenigstens ein Führungsstück (7) umfasst, das sich radial in dem Führungsmittel erstreckt, wenn der erste Mitnahmeanschlag (4) mit dem zweiten Mitnahmeanschlag (11) in Eingriff ist, derart, dass wenn die ersten und zweiten Mitnahmeanschläge (4, 11) ihren gegenseitigen Eingriff am Ende des Schraubvorgangs des Schraubenkorpus (B) verlieren, das Stück (7) unter dem Eindruck eines auf den Schraubenkopf (A) angewendeten vorbestimmten Schraubdrehmoments zum Brechen vorgesehen ist.

3. Befestigungselement nach Anspruch 2, **dadurch gekennzeichnet, dass** das axiale Führungsmittel an dem Schraubenkorpus (B) vorgesehen ist, und das Stück (7) an dem Einsatz (2) des Schraubenkopfs (A) vorgesehen ist.

4. Befestigungselement nach Anspruch 1 oder 2, **dadurch gekennzeichnet, dass** der Einsatz (2) des Schraubenkopfs (A) einen distalen Endbereich umfasst, der einen Ring (5) bildet, dass das Gewinde (10) des Schraubenkorpus (B) eine Einsenkung umfasst, in die der Ring (5) eindringt, und dass die Einsenkung einen Absatz (13) bildet, auf dem sich ein Kragen (6) des Rings (5) abstützt.

5. Befestigungselement nach Anspruch 3, **dadurch gekennzeichnet, dass** das Führungsmittel ein Spalt (12) ist, der sich axial entlang der Einsenkung erstreckt, und dass das Stück (7) an dem Einsatz (2) in Bezug auf den proximalen Endbereich des Einsatzes (2) oberhalb des Rings (5) vorstehend angeordnet ist.

6. Befestigungselement nach Anspruch 5, **dadurch gekennzeichnet, dass** in dem Spalt (12) ein Halteanschlag (14) vorgesehen ist, an dem das Stück (7) vorbei geht, wenn der Schraubenkopf (A) in den Schraubenkorpus (B) eingeführt wird.

7. Befestigungselement nach einem der vorhergehenden Ansprüche, **dadurch gekennzeichnet, dass** es aus einem einzigen geformten Teil hergestellt ist.

## Claims

1. Fastening element comprising a screw head (A) with a flat bottom side from which an insert (2) extends axially, which insert gets into an opening (10) of a screw body (B) externally threaded to be screwed in a hole of a support, said insert (2) having a proximal end provided with a sawtooth-shaped drive first stop (4) and said screw body (B) having a top end provided with a bevelled drive second stop (11) into which said first stop (4) is engaged in such a way that said screw head (A) is able to drive said screw body (B) into rotation for a screwing of said screw body into said support, **characterized in that** said bottom side of said screw head (A) extends radially beyond said screw body (B), **in that** said top end of said screw body (B) is arranged without head and with a diameter smaller than that of said hole of said support.

2. Fastening element according to claim 1, **characterized in that** it further comprises an axial guidance means for at least one guidance piece (7) that extends radially in said guidance means when said drive first stop (4) is engaged into said drive second stop (11) in such a way that when said drive first and second stops (4, 11) are not anymore in reciprocal engagement at the end of said screw body (B) screwing, said piece (7) is arranged to break under the effect of a predetermined torque force applied to said screw head (A).

3. Fastening element according to claim 2, **characterized in that** said axial guidance means is arranged on said screw body (B) and said piece (7) is arranged on said insert (2) of said screw head (A).

4. Fastening element according to claim 1 or 2, **characterized in that** said insert (2) of said screw head (A) comprises a distal end portion forming a bushing (5), **in that** said opening (10) of said screw body (B) comprises a counterbore into which said bushing (5) comes to rest and **in that** said counterbore forms a shoulder (13) onto which a ridge (6)of said bushing (5) leans.

5. Fastening element according to claim 3, **characterized in that** said guidance means is a slot (12) that extends axially along said counterbore, and **in that** said piece (7) is arranged to protrude from said insert (2) above said ring (5) with respect to the proximal end of said insert (2) .

6. Fastening element according to claim 5, **characterized in that** said slot (12) a hold stop (14) is arranged, in front of which runs said piece (7) when said screw head (A) is inserted into said screw body (B).

7. Fastening element according to one of preceding claims, **characterized in that** it is made of a single molded piece.
